**Europäisches Patentamt**

**European Patent Office**

**Office européen des brevets**

(11) Veröffentlichungsnummer: **0 214 998**
**B1**

(12) **EUROPÄISCHE PATENTSCHRIFT**

(45) Veröffentlichungstag der Patentschrift:
25.01.89

(51) Int. Cl.⁴: **C 09 D 5/44**

(21) Anmeldenummer: **85903983.6**

(22) Anmeldetag: **02.08.85**

(86) Internationale Anmeldenummer:
**PCT/DE 85/00261**

(87) Internationale Veröffentlichungsnummer:
**WO 86/01526 (13.03.86 Gazette 86/06)**

(54) **KATHODISCH ABSCHEIDBARES WÄSSRIGES ELEKTROTAUCHLACKÜBERZUGSMITTEL UND VERFAHREN ZUM BESCHICHTEN EINES ELEKTRISCH LEITENDEN SUBSTRATS.**

(30) Priorität: **01.09.84 DE 3432233**

(43) Veröffentlichungstag der Anmeldung:
**25.03.87 Patentblatt 87/13**

(45) Bekanntmachung des Hinweises auf die Patenterteilung:
**25.01.89 Patentblatt 89/4**

(84) Benannte Vertragsstaaten:
**AT BE CH DE FR GB IT LI NL SE**

(56) Entgegenhaltungen:
**EP-A-0 004 090**
**EP-A-0 083 232**
**EP-A-0 102 566**

(73) Patentinhaber: **BASF Lacke + Farben Aktiengesellschaft, Postfach 61 23, D-4400 Münster (DE)**

(72) Erfinder: **GEIST, Michael, Rubensstrasse 251, D-4400 Münster (DE)**
Erfinder: **SCHÖN, Georg, Schillerstrasse 2, D-4416 Everswinkel (DE)**
Erfinder: **DOBBELSTEIN, Arnold, Emil- Nolde- Weg 95, D-4400 Münster (DE)**
Erfinder: **OTT, Günther, Von- Holte- Strasse 101 a, D-4400 Münster (DE)**

EP 0 214 998 B1

## Beschreibung

Die Erfindung betrifft ein kathodisch abscheidbares wäßriges Eektrotauchlacküberzugsmittel, das ein Kunstharz-Bindemittel, welches Amino- und/oder Hydroxylgruppen enthält und durch Protonisieren mit Säuren wasserlöslich gemacht werden kann, und eine Mischung von Vernetzungsmitteln sowie Pigmente, Füllstoffe, Korrosionsschutzinhibitoren, Lackhilfsmittel, gegebenenfalls Katalysatoren und in einer Menge bis zu 15 Gew.-%, bezogen auf das Gesamtgewicht des Überzugsmittels, organische Lösungsmittel enthält.

In den vergangenen Jahren hat die kathodische Elektrotauchlackierung, insbesondere bei der Grundierung von Kfz-Karossen, die anodische Elektrotauchlackierung mehr und mehr verdrängt. Hierfür werden dem Markt eine große Anzahl von Bindemittelsystemen angeboten. Die Bindemittelsysteme sind entweder selbst- oder fremdvernetzend. Die fremdvernetzenden Systeme haben eine größere Bedeutung gewonnen, da sie eine breitere Applikationsbasis aufweisen. Solche fremdvernetzenden Bindemittelsysteme sind zum Beispiel in der DE-OS-2 701 002, EP-A-12 463 und der DE-PS-3 108 073 beschrieben. So werden beispielsweise in der DE-OS-2 701 002 ein wasserdispergierbares kationisches Kunstharz und dessen Verwendung zum Überziehen eines als Kathode geschalteten elektrisch leitenden Substrats beschrieben. Als Kunstharz kommt das ungelierte Reaktionsprodukt aus einem Polyepoxid, einem sekundären Amin und einem organischen Polyol mit mindestens 2 primären Hydroxylgruppen zur Verwendung.

Die Überzugsmassen enthalten Vernetzungs- oder Härtungsmittel. Als bevorzugte fremd vernetzende Vernetzungsmittel kommen blockierte Polyisocyanate in Frage. Diese reagieren mit den reaktiven Amino- oder Hydroxylgruppen erst dann, wenn der überzogene Gegenstand auf eine höhere Temperatur erwärmt worden ist, die ausreicht, um die Blockierung des Isocyanats aufzuheben. Dabei kommen auch Mischungen von verschiedenen Polyisocyanaten zur Anwendung.

Die EP-B-4 090 beschreibt ebenfalls ein kathodisch abscheidbares wäßriges Elektrotauchlack-Überzugsmittel, das aus einem Kunstharzbindemittel mit Aminogruppen, welches durch Säurezugabe wasserlöslich gemacht werden kann, und einem Estergruppen enthaltenden Vernetzungsmittel besteht, die im basischen Medium bei Temperaturen über 140°C mit den primären und/oder sekundären Aminogruppen des Kunstharzbindemittels unter Amidbildung reagieren. Zwecks Variation der anwendungstechnischen Eigenschaften werden gegebenenfalls noch in geringem Umfang weitere modifizierende Harze, wie z. B. blockierte Isocyanate, einemulgiert. Mit Hilfe derartiger fremdvernetzender Bindemittelsysteme können abgeschiedene Filme mit einer akzeptablen Oberfläche hergestellt werden. Dennoch besteht aber der dringende Wunsch, diese Oberflächen deutlich zu verbessern, um gegebenfalls einen Zweischichtaufbau bei der Gesamtlackierung zu ermöglichen. Die Ursache für die Filmoberflächenstörungen liegt häufig darin, daß Untergrundrauhigkeiten des zu beschichtenden Blechs durch den eingebrannten Film hindurch an dessen Oberfläche sichtbar werden. Hieraus resultiert dann auch ein Decklack mit gestörter Oberfläche. Die Untergrundrauhigkeit wird also nach oben abgebildet.

Der Erfindung liegt daher die Aufgabe zugrunde, die Abbildung von Untergrundfehlern des eingebrannten Films zu vermeiden und ein Elektrotauchlack-Überzugsmittel zu schaffen, das zu einer besseren Oberflächenqualität führt.

Überraschenderweise wurde gefunden, daß diese Aufgabe durch ein Elektrotauchlacküberzugsmittel gelöst wird, das ein fremdvernetzendes Kunstharzbindemittel und eine Mischung unterschiedlich reaktiver Vernetzungsmittel enthält. Gegenstand der vorliegenden Erfindung ist also ein Elektrotauchlack-Überzugsmittel der eingangs genannten Art, das dadurch gekennzeichnet ist, daß die Mischung der Vernetzungsmittel mindestens zwei unterschiedlich reaktive Vernetzungsmittel auf der Basis mit unterschiedlichen Alkylmonoalkoholen blockierter Polyisocyanate oder auf der Basis mit unterschiedlichen aliphatischen Aminen blockierter Polyisocyanate oder auf der Basis mit aliphatischen Aminen und Alkylmonoalkoholen blockierter Polyisocyanate oder auf der Basis aktivierter Ester oder auf der Basis aktivierter Ester und blockierter Polyisocyanate enthält, wobei unterschiedlich reaktiv bedeutet, daß die Vernetzungsreaktion beim Erhitzen bei Temperaturen, die um mindestens 10°C auseinanderliegen, beginnt und wobei der zuerst reagierende Vernetzer in einem Anteil von 15 bis 60 Mol-%, bezogen auf die Vernetzungsmittelmischung, vorliegt.

Zur Messung des Starts der Vernetzungsreaktion eignet sich die "Differential scanning calorimetry" (DSC). Diese kalorimetrische Methode hat sich zur Untersuchung von Harzen und Polymerwerkstoffen bestens bewährt und wird häufig eingesetzt. Die Methode wird z. B. beschrieben in

Ke Bacon: Newer Methods of Polymer
Characterization, John Wiley & Sons,
New York 1964
D. Schultze: Differentialthermoanalyse
Verlag Chemie, Weinheim 1969

Eine weitere dem Lackfachmann vertraute Methode besteht darin, daß man die verschiedenen Vernetzer mit einem Standardbindemittel mischt und daraus einen Lack zubereitet. Mit diesem Lack werden Filme hergestellt und bei unterschiedlichen Temperaturen eingebrannt. Die eingebrannten Filme werden nun mit Lösemittel abgerieben. Man stellt bei diesem Test fest, ab welcher Einbrenntemperatur die Filme durch das Lösemittel nach z. B. 20 Doppelhüben mit einem mit Lösemittel getränkten Wattebausch nicht mehr angegriffen werden. So kann man auf eine sehr einfache Weise eine Rangfolge verschiedener Vernetzer aufstellen. Als Testbindemittel wählt man vorteilhaft jenes Bindemittel aus, das später auch die Vernetzermischung enthalten soll.

Mit Beginn der Vernetzung kommt es zu einem dramatischen Anstieg der Viskosität des Lackfilms. Diesen Effekt kann man sehr gut zur Definition des Vernetzungsbeginns nutzen. Als Testgeräte zur Bestimmung der Viskosität bzw. des Viskositätsanstiegs stehen die herkömmlichen Rotationsviskosimeter und Platte-Kegel-Viskosimeter zur Verfügung. Eine weitere bestens geeignete Möglichkeit zur Verfolgung der Viskosität während des Einbrennvorgangs bietet die "Rollende-Kugel-Technik". Die theoretischen Grundlagen und die praktische Durchführung werden z. B. eingehend von GÖRING, DINGERDISSEN und HARTMANN in Farbe und Lack 83. Jahrg. Nr. 4 1977 S. 270 - 277 beschrieben. Während des Einbrennvorgangs sinkt zunächst die Viskosität des Lackfilms durch die Temperaturerhöhung ab. Durch die einsetzende Vernetzung wird dieser Vorgang beendet, und die Viskosität steigt dann sehr rasch an. Das hierbei zu beobachtende Viskositätsminimum kann man nun als Beginn der effektiven Vernetzung ansehen.

Die unterschiedliche Reaktivität der Vernetzungsmittel, die also entweder durch unterschiedliche Vernetzer oder durch unterschiedliche Blockierungsmittel hervorgerufen wird, führt dazu, daß die Vernetzungsreaktionen beim Einbrennen bei Temperaturen, die um mindestens 10°C auseinanderliegen, beginnen.

Für die Bindemittel der erfindungsgemäßen Elektrotauchlack-Überzugsmittel eignen sich insbesondere Epoxidharze in vielfältiger Ausführung, wie sie unter anderem in den Patentschriften DE-PS-2 701 002, EP-B-4 090, DE-PS-3 108 073 und der Patentanmeldung EP-A-12 463 beschrieben werden. Dort und auch an anderen Stellen werden darüber hinaus andere Bindemittelgruppen erwähnt, die sich für den erfindungsgemäßen Einsatz eignen. Aufgrund des besonders guten Korrosionsschutzes werden derzeit jedoch die Epoxidharze bevorzugt.

Kationische wasserdispergierbare Kunstharze als Bindemittel für Elektrotauchlacke sind bekannt. So beschreibt z. B. die DE-OS-2 701 002 ein derartiges Harz, das ein Reaktionsprodukt von einem Polyepoxid, einem sekundären Amin und einem organischen Polyol mit mindestens 2 alkoholischen primären Hydroxylgruppen ist. Die Harze entstehend durch Kettenverlängerung von hochmolekularen Polyepoxiden mit mindestens 2 Epoxidgruppen pro Molekül. Die Kettenverlängerung wird durch ein organisches Polyol und die Wasserdispergierbarkeit durch Anlagerung eines sekundären Amins erzielt.

In der DE-OS-3 108 073 wird ein Bindemittel für die Elektrotauchlackierung beschrieben, bei dessen Anwendung größere Schichtdicken erzielt werden. Die eingesetzn Bindemittel sind Reaktionsprodukte von

A) niedermolekularen, aromatische Gruppen enthaltenden Epoxidharzen,

B) aliphatischen und/oder alicylischen polyfunktionellen Alkoholen und/oder Carbonsäuren mit einem Molekulargewicht unter 350,

C) gegebenenfalls bis zu 60 Gew.-%, bezogen auf das gesamte Bindemittel, polyfunktionellen Alkoholen, Carbonsäuren und/oder SH-Verbindungen mit einem Molekulargewicht von 500 bis 5000 und

D) primären, sekundären und/oder tertiären Aminen und/oder deren Salzen oder eine Sulfid/Säuremischung oder einer Phosphin/Säuremischung.

Als Polyepoxide (Komponente A) können Materialien verwendet werden, die zwei oder mehr Epoxidgruppen im Molekül enthalten. Bevorzugt sind Verbindungen mit zwei Epoxidgruppen im Molekul. Die Polyepoxide haben ein relativ niedriges Molekulargewicht von höchstens 750, bevorzugt 400 - 500. Die Polyepoxide können zum Beispiel Polyglycidylether von Polyphenolen sein, wie Bisphenole, vorteilhaft z. B. Bisphenol A. Man kann diese Polyepoxide durch Veretherung eines Polyphenols mit einem Epihalohydrin in Gegenwart von Alkali herstellen. Beispiele für geeignete Phenolverbindungen sind Bis(4-hydroxyphenyl)-2,2-propan, 4,4'-Dihydroxybenzophenon, Bis(4-hydroxyphenyl)-1,1-ethan, Bis(4-hydroxyphenyl)-1,1-isobutan, Bis(4-hydroxy-tertiär-butylphenyl)-2,2-propan, Bis(2-hydroxynaphthylmethan,1,5-Dihydroxynaphthalin und Hydantoinepoxide.

Eine andere geeignete Klasse von Polyepoxiden sind Polyglycidylether von phenolischen Novolakharzen.

Vorteilhaft können auch Polyglycidylester von aromatischen Polycarbonsäuren verwendet werden.

Als Komponente B werden aliphatische und/oder alicyclische polyfunktionelle Alkohole oder Carbonsäuren mit einem Molekulargewicht unter 350 eingesetzt.

Beispiele sind:

Diole, wie Ethylenglykol, Diglykol, Dipropylenglykol, Dibutylenglykol, Triglykol, 1,2-Propandiol. 1,3-Propandiol, 2,2-Dimethyl-1,3-propandiol, 2,2-Diethyl-1,3-propandiol, 2-Methyl-2-ethyl-1,3-propandiol, 2-Methyl-2-propyl-1,3-propandiol, 2-Ethyl-2-butyl-1,3-propandiol, 1,2-Butandiol, 1,4-Butandiol, 2,3-Butandiol, 2-Ethyl-1,4-butandiol, 2,2-Diethyl-1,3-butandiol, Buten-2-diol-1,4, 1,2-Pendandiol, 1,5-Pentandiol, 3-Methyl-1,5-Pentandiol, 1,6-Hexandiol, 2,5-Hexandiol, 2-Ethyl-1,3-hexandiol, 2,5-Dimethyl-2,5-hexandiol, 1,3-Octandiol, 4,5-Nonandiol, 2,10-Decandiol, 2-Hydroxyethylhydroxy-acetat, 2,2-Dimethyl-3-hydroxypropyl-2,2-dimethylhydroxypropionat, 2-Methyl-2-propyl-3-hydroxypropyl-2-methyl-2-propionat, 4,4'-Methylenbiscyclohexanol und 4,4'-Isopropylidenbiscyclohexanol. Einige bevorzugte Diole sind 2,2-Dimethyl-1,3-propandiol, 3-Methyl-1,5-pentandiol, 2,2-Dimethyl-3-hydroxypropyl-2,2-dimethylhydroxy-propionat und 4,4'-Isopropylidenbiscyclohexanol.

Als Carbonsäuren kommen eine Vielzahl von Dicarbonsäuren in Betracht, wie Oxalsäure, Malonsäure, 2,2-Di-methylmalonsäure, Bernsteinsäure, Glutarsäure, Adipinsäure, Hexahydrophthalsäure, Maleinsäure, Fumarsäure, Pimelinsäure, Korksäure, Azelainsäure, Sebazinsäure, Itakonsäure, Citrakonsäure, Mesakonsäure und Glutakonsäure.

Bevorzugt eingesetzte Dicarbonsäuren sind z. B. 2,2-Di-methylmalonsäure und Hexahydrophthalsäure.

Als Komponente C sind polyfunktionelle Alkohole, Carbonsäuren und SH-Verbindungen geeignet. Eingeschlossen werden Diole, Triole und höhere polymere Polyole, wie Polyesterpolyole und Polyetherpolyole.

Besonders bevorzugt sind Polyesterpolyole und unter ihnen die Polycaprolactonpolyole. Die Polyesterpolyole sind bekanntlich herstellbar durch Polyveresterung von organischen Polycarbonsäuren oder ihren Anhydriden mit organischen Polyolen, die primäre Hydroxylgruppen enthalten. Üblicherweise sind die Polycarbonsäuren und die Polyole aliphatische oder aromatische Dicarbonsäuren und Diole.

Die zur Herstellung der Polyester verwendeten Diole schließen Alkylenglykole, wie Ethylenglykol, Butylenglykol, Neopentylglykol und andere Glykole wie Cyclohexandimethanol ein.

Die Säurekomponente des Polyesters besteht in erster Linie aus niedermolekularen Carbonsäuren oder ihren Anhydriden mit 2 bis 18 Kohlenstoffatomen im Molekül.

Geeignete Säuren sind beispielsweise Phthalsäure, Isophthalsäure, Terephthalsäure, Tetrahydrophthalsäure, Hexahydrophthalsäure, Adipinsäure, Azelainsäure, Sebazinsäure, Maleinsäure, Glutarsäure, Hexachlorheptandicarbonsäure und Tetrachlorphthalsäure. Anstelle dieser Säuren können auch ihre Anhydride, soweit diese existieren, verwendet werden.

Als Polyesterpolyole kommen solche, die sich von Lactonen ableiten, in Frage.

Das für die Umsetzung mit der Epoxidverbindung als Komponente D verwendete Amin kann primär, sekundär oder tertiär sein, wobei sekundäre Amine sich besonders gut eignen. Bevorzugt sollte das Amin wasserlöslich sein. Beispiele solcher Amine sind Mono- und Dialkylamine, wie Methylamin, Ethylamin, Propylamin, Butylamin, Dimethylamin, Diethylamin, Dipropylamin, Methylbutylamin und dergleichen. Polyamine mit primären und sekundären Aminogruppen können in Form ihrer Ketimine mit den Epoxidgruppen umgesetzt werden. Die Umsetzung des Amins mit den Epoxidgruppen tritt häufig schon beim Vermischen der Ausgangssubstanzen ein. Gegebenenfalls ist eine Erwärmung auf 50 bis 150°C nötig.

Für die Umsetzung mit der epoxihaltigen Verbindung muß mindestens eine solche Menge an Amin verwendet werden, daß das Harz einen kationischen Charakter annimmt, das heißt, daß es unter dem Einfluß einer Spannung in dem Beschichtungsbad zu der Kathode wandert, wenn es durch Zugabe einer Säure löslich gemacht worden ist. Zur Neutralisation der Amine geeignete Säuren sind unter anderem Borsäure, Milchsäure, Ameisensäure, Essigsäure, Propionsäure, Buttersäure, Salzsäure. Die Modifizierung mit Aminogruppen hat also den Zweck, das Bindemittel wasserlöslich und kationisch zu machen.

Besonders gut hat sich bei dem Bindemittel des erfindungsgemäßen Elektrotauchlack-Überzugmittels auch die Modifizierung mit Ketiminen bewährt. Bekannterweise sind Ketimine das Umsetzungsprodukt von primären Aminen mit Ketonen. Auf diese Weise, neben anderen hier nicht näher zu beschreibenden Methoden, können nach dem Dispergieren des Harzes im Wasser freie primäre Aminogruppen im Harz realisiert werden.

Die Epoxidharze enthalten des weiteren noch freie Hydroxylgruppen, welche durch einen gezielten Syntheseweg eingeführt werden. Somit stehen in den üblichen und auch marktrelevanten Bindemitteln Hydroxylgruppen und häufig auch Aminogruppen zur Vernetzung mit einem zugemischten Fremdvernetzer zur Verfügung. Diese und andere bekannte kationischen Bindemittel können bei der vorliegenden Erfindung eingesetzt werden. Um unter Verwendung der beschriebenen Bindemittel hochbeständige Überzüge zu erhalten, wird dem Elektrotauchlack ein Vernetzungsmittel zugesetzt, das bei erhöhten Temperaturen die Vernetzung des Bindemittels bewirkt. Die für die erfindungsgemäße Vernetzungsmittelmischung geeigneten Vernetzer müssen also gegenüber Hydroxyl- und Aminogruppen reaktiv sein.

Für das erfindungsgemäße Elektrotauchlack-Überzugsmittel eignen sich als Vernetzerkomponenten z. B. blockierte Polyisocyanate, wie sie in der DE-AS-2 057 799 und der DE-OS-3 108 073 eingehend beschrieben werden.

Die blockierten Polyisocyanate sind bei Raumtemperatur beständig und werden erst bei erhöhter Temperatur entblockt. Die freigesetzten Polyisocyanate können dann sowohl mit den durch Öffnung der Epoxidringe entstandenen Hydroxylgruppen unter Urethanbildung als auch mit den freien Aminogruppen des Bindemittels unter Harnstoffbildung beim Einbrennvorgang reagieren. Vernetzungsmittel bzw. Vernetzungsmittelmischungen machen in der Regel etwa 5 bis 60 Gew.-% des Bindemittels aus. Bevorzugt sind 20 bis etwa 40 Gew.-% des Bindemittels. Es können bei der Erfindung beliebige Polyisocyanate verwendet werden, bei denen die Isocyanatgruppen mit einer Verbindung umgesetzt worden sind, so daß das gebildete blockierte Polyisocyanat gegenüber Hydroxylgruppen bei Raumtemperatur beständig ist, bei erhöhter Temperatur, in der Regel von etwa 90 bis etwa 300°C, aber reagiert.

Bei der Herstellung der blockierten Polyisocyanate können beliebige für die Vernetzung geeignete organische Polyisocyanate verwendet werden. Bevorzugt sind die Isocyanate, die etwa 3 bis etwa 36, insbesondere etwa 8 bis etwa 15 Kohlenstoffatome enthalten. Beispiele von geeigneten Diisocyanaten sind Trimethylendiisocyanat, Tetramethylendiisocyanat, Pentamethylendiisocyanat, Hexamethylendiisocyanat, Propylendiisocyanat, Ethylethylendiisocyanat, 2,3-Dimethylethylendiisocyanat, 1-Methyltrimethylendiisocyanat, 1,3-Cyclopentylendiiso-cyanat, 1,4- Cyclohexylendiisocyanat, 1,2-Cyclohexylendiisocyanat, 1,3-Phenylendiisocyanat, 1,4-Phenylendi-isocyanat, 2,4- Toluylendiisocyanat, 2,6-Toluylendiisocyanat, 4,4'-Biphenylendiisocyanat, 1,5-Naphthylendi-isocyanat, 1,4- Naphthylendiisocyanat, 1-Isocyanatomethyl-5-isocyanato1,3,3-trimethylcyclohexan, bis(4-Isocyanatocyclohexyl)-methan, Bis(4-isocyanatophenyl)methan, 4,4'-Diisocyanatodiphenylether und 2,3-Bis(8-isocyanatooctyl)-4-octyl5-hexylcyclohexen. Es können auch Polyisocyanate von höherer Isocyanatfunktionalität verwendet werden. Beispiele dafür sind Tris(4-isocyanatophenyl)methan, 1,3,5-Triisocyanatobenzol, 2,4,6-Triisocyanatotoluol, 1,3,5-Tris-(6-isocyanatohexyl)biuret, Bis(2,5-diisocyanato-4-methylphenyl)methan und polymere Polyisocyanate, wie Dimere und Trimere von Diisocyanatotoluol.

Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohol, cycloaliphatische Alkohole, wie Cyclopentanol und Cyclohexanol, aromatische Alkylalkohole, wie Phenylcarbinol und Methylphenylcarbinol. Es können auch geringe Anteile an höhermolekularen und relativ schwer flüchtigen Monoalkoholen gegebenenfalls mitverwendet werden, wobei diese Alkohole nach ihrer Abspaltung als Weichmacher in den Überzügen wirken.

Die blockierten Polyisocyanate werden hergestellt, indem man eine ausreichende Menge eines Alkohols mit dem organischen Polyisocyanat umsetzt, so daß keine freien Isocyanatgruppen mehr vorhanden sind. Die Umsetzung zwischen dem organischen Polyisocyanat und dem Blockierungsmittel ist exotherm. Deshalb werden das Polyisocyanat und das Blockierungsmittel bevorzugt bei einer Temperatur, die nicht höher ist als 80°C, insbesondere niedriger als 50°C, gemischt.

Die Chemie der blockierten Isocyanate beruht auf der bei höheren Temperaturen reversiblen Gleichgewichtsreaktion der Urethanbildung. Durch Umsetzung von Isocyanaten mit geeigneten Verbindungen lassen sich somit die NCO-Gruppen blockieren und bei Bedarf durch Erhitzen wieder regenerieren. Da die blockierten Isocyanate im Gegensatz zu den freien Isocyanaten bei Raumtemperatur nicht reagieren, sind die mit hydroxylgruppenhaltigen Polyestern oder Polyethern hergestellten Mischungen lagerstabil. Polyurethaneinkomponentenlacke dieser Art sind "Einbrennsysteme", die erst bei höheren Temperaturen unter Abspaltung des Blockierungsmittels vernetzen. Die Tendenz zu thermischen Dissoziation der blockierten Isocyanate ist sowohl von der Isocyanatkomponente als auch von der chemischen Struktur des Blockierungsmittels abhängig. Thermisch am stabilsten sind Urethane aus aliphatischen Isocyanaten und primären Alkoholen, die erst bei etwa 230°C aufspalten. Weniger stabil sind die Urethane der aromatischen Isocyanate mit primären Alkoholen. Am leichtesten spaltbar sind die Phenylurethane der aromatischen Isocyanate.

Der Temperaturbereich, in dem die Rückspaltung zum Isocyanat eintritt, läßt sich durch Erhitzen des gelösten Abspalters mit einer Lösung von Acetylcellulose ermitteln.

In ähnlicher Weise können aliphatische Amine als Blockierungsmittel für Polyisocyanate eingesetzt werden.

Durch die Umsetzung von Polyisocyanaten mit den Blockierungsmitteln Alkohol oder Amin entstehen Urethan- oder Harnstoffgruppen, die unter den Einbrennbedingungen das Blockierungsmittel wieder abgeben und dann mit den reaktiven Gruppen im Bindemittel unter Vernetzung reagieren können.

Da die Abspaltungstemperaturen von blockierten Polyisocyanaten jeweils vom Blockierungsmittel und von der Art des Isocyanats abhängen, können bei dem erfindungsgemässen Elektrotauchlack-Überzugsmittel durch Einsatz verschiedener Blockierungsmittel bei einem bestimmten Isocyanat jeweils unterschiedlich reaktive Vernetzer erhalten werden.

Als Blockierungsmittel für Polyisocyanate werden bei dem erfindungsgemäßen Elektrotauchlack-Überzugsmittel entweder unterschiedliche Alkohole, unterschiedliche Amine oder gleichzeitig Alkohole und Amine eingesetzt.

Eine weitere Gruppe geeigneter Vernetzer umfaßt die Gruppe Vernetzer, die durch Umesterung oder Amidierung die Vernetzung bewirken.

Die reaktive Estergruppe kann sowohl im Säure- als auch im Alkoholteil aktiviert werden. Beispiele hierfür sind in der EP-A-12 463 beschriebene Umesterungsvernetzer, die im Alkoholteil durch eine β-Hydroxy-Gruppe aktiviert sind. In der DE-OS-3 103 642 wird die Vernetzung durch Aminolyse von β-Hydroxyalkylestergruppen enthaltenden Vernetzern beschrieben. In der GB-A 2 102 430 ist die Vernetzung durch δ-Alkoxyester, β-Estergruppen, β-Aminogruppen sowie durch γ - und δ - ständige aktivierende Gruppen beschrieben. Die Vernetzungsmittelmischung des erfindungsgemäßen Elektrotauchlack-Überzugmittels kann auch gleichzeitig aus blockierten Polyisocyanaten und Vernetzern mit aktivierten Estergruppen bestehen.

In der EP-B 4 090 wird eine Vernetzungsmittelmischung beschrieben, die neben aktivierten Esterkomponenten noch in geringem Umfang aus anderen Vernetzungsmitteln, wie z. B. blockierten Isocyanaten, besteht. Es wurde gefunden, daß geringe Zusätze anderer Vernetzer zu aktivierten Estern nicht zu einer Verbesserung der Oberflächengüte der eingebrannten Filme führen. Angesichts der Aussage in der EP-B 4 090, das die zugemischten Vernetzer nur im geringen Umfang einzusetzen seien, war es nicht naheliegend, unterschiedlich reaktive Vernetzer in den beanspruchten Molverhältnissen zu mischen, da eine Verbesserung der Oberflächengute nicht vorhersehbar war.

Bei dem Einbrennvorgang reagieren die Vernetzer aufgrund ihrer unterschiedlichen Reaktivität abgestuft, d. h. zeitlich versetzt und bei unterschiedlichen Einbrenntemperaturen. Bei dem · erfindungsgemäßen Elektrotauchlack-Überzugsmittel liegen die Temperaturen, bei denen die Vernetzungsreaktion der unterschiedlich reaktiven Vernetzer beginnt, um mindestens 10°C auseinander.

Durch den zuerst reagierenden Vernetzer wird ein guter Verlauf fixiert, bevor es zum Schrumpf des Gesamtfilms über den Rauhigkeiten des metallischen Substrats kommen könnte. Der danach wirksam werdende Vernetzer dient zur endgültigen Vernetzung des vorfixierten, gelartigen Lackfilms. Wird nur eine Vernetzerkomponente eingesetzt, tritt beim Einbrennen der Schrumpfungsprozeß so ein, daß die Rauhigkeiten des metallischen Substrats nach oben abgebildet werden.

Die Erfindung betrifft auch ein Verfahren zum Beschichten eines elektrisch leitenden Substrats, bei dem das Substrat in ein wäßriges Bad auf der Basis eines mindestens teilweise mit Säuren neutralisierten, kationischen, Amino- und/oder Hydroxylgruppen enthaltenden Kunstharzbindemittels, das eine Mischung von Vernetzungsmitteln sowie Pigmente, Füllstoffe, Korrosionsschutzinhibitoren, Lackhilfsmittel, gegebenenfalls Katalysatoren und in einer Menge bis zu 15 Gew.-%, bezogen auf das Gesamtgewicht des Überzugsmittels, organische Lösungsmittel enthält, eintaucht und als Kathode geschaltet wird, mittels Gleichstrom ein Film auf dem Substrat abgeschieden wird, das Substrat aus dem Bad entfernt wird und der Film durch Einbrennen gehärtet wird, das dadurch gekennzeichnet ist, daß die Mischung der Vernetzungsmittel mindestens zwei unterschiedlich reaktive Vernetzungsmittel auf der Basis mit unterschiedlichen Alkylmonoalkoholen blockierter Polyisocyanate oder auf der Basis mit unterschiedlichen aliphatischen Aminen blockierter Polyisocyanate oder auf der Basis mit aliphatischen Aminen und Alkylmonoalkoholen blockierter Polyisocyanate oder auf der Basis aktivierter Ester oder auf der Basis aktivierter Ester und blockierter Polyisocyanate enthält, wobei unterschiedlich reaktiv bedeutet, daß die Vernetzungsreaktion beim Erhitzen bei Temperaturen, die um mindestens 10°C auseinanderliegen, beginnt und wobei der zuerst reagierende Vernetzer in einem Anteil von 15 bis 60 Mol-%, bezogen auf die Vernetzungsmittelmischung, vorliegt. Vortelhafte Ausgestaltungen des erfindungsgemäßen Verfahrens ergeben sich aus den Ansprüchen 2 bis 7.

Im folgenden wird die Erfindung an Hand von Beispielen näher erläutert. Alle Angaben über Teile und Prozentsätze sind Gewichtsangaben, falls nicht ausdrücklich etwas anderes festgestellt wird.

A) Darstellung der Vernetzer
a) Darstellung des Vernetzers I
Ein Reaktor, der mit einer Heizvorrichtung, einem Kühler, einem Rührer, einem Thermometer, einer Ausgangsleitung, die zu einer Waschvorrichtung führt, und elner Einrichtung zum Einleiten von Stickstoff ausgerüstet ist, wird mit 12 280 Teilen Toluylendiisocyanat (Mischung aus etwa 80 % 2,4-Toluylendiisocyanat und etwa 20 % 2,6-Toluy-lendiisocyanat) beschickt. Es wird Stickstoff eingeleitet, und der Kühler wird eingeschaltet. Im Verlauf von 5 Stunden werden 5 550,5 Teile 2-Ethylhexanol allmählich zugegeben, wobei die Temperatur allmählich auf 50°C steigt. Während die Temperatur von 50°C aufrecht erhalten wird, werden weitere 3 649,5 Teile 2-Ethylhexanol im Verlauf von 4 Stunden zugegeben. Die Reaktionsmischung wird 75 Minuten bei 50°C gehalten, dann wird der Kühler abgeschaltet, und es werden 3,6 Teile Dibutylzinndilaurat zugegeben. Die Heizvorrichtung wird angeschaltet, und die Reaktionsmischung wird im Verlauf von 45 Minuten auf 65,6° erwärmt. Im Verlauf von zwei Stunden und 50 Minuten werden 3 184 Teile 1,1,1-Trimethylolpropan zugegeben, wobei die Temperatur von 65,6 auf 120°C steigt. Die Reaktionsmischung wird bei dieser Temperatur 90 Minuten gehalten, dann werden 10 560 Teile 2-Ethoxyethanol zugegeben. Das entstandene Produkt ist eine Lösung eines Polyurethanvernetzungsmittels.

Die Mindesteinbrenntemperatur dieses Polyurethanvernetzungsmittels beträgt 165°C.

b) Darstellung des Vernetzers II
2.360 g Glycidylester der 2-Methyl-2-ethylheptan-säure werden mit 2.073 g Trimellithsäureanhydrid in einem Reaktionsgefäß auf 130°C erhitzt. Hierbei springt die stark exotherme Reaktion an. Durch externe Kühlung wird die Reaktion bei 150°C gehalten, bis eine Säurezahl von 183 erreicht ist. Danach kühlt man auf 90°C ab und setzt 1.450 g Methylisobutylketon zu. Anschließend tropft man 835 g Propylenoxid langsam zu. Bei einer Säurezahl 2 wird die Reaktion abgebrochen. Der Festkörper der Harzlösung wird mit weiterem Methylisobutylketon auf 70 % eingestellt. Die Mindesteinbrenntemperatur dieses Vernetzers beträgt 180°C.

c) Darstellung des Vernetzers III
2 599 Teile Desmodur N (trimerisiertes Hexamethylendiisocyanat, 75 %-ig in Ethylglykolacetat-Xylol) werden unter Stickstoffüberschichtung in einem geeigneten Reaktor vorgelegt. Während 6 Stunden werden nun 1 290 Teile Dibutylamin zugetropft. Man hält die Temperatur dabei unter 45°C. Danach kühlt man auf Raumtemperatur ab und filtriert die Vernetzerlösung. Die Mindesteinbrenntemperatur dieses Polyurethanvernetzers beträgt 140°C.

B) Darstellung der Kunstharzbindemittel
a) Darstellung des Bindemittels I
Das Bindemittel wird analog dem Beispiel A der EP-A-70 550 hergestellt. In einem geeigneten Reaktor werden 1 019 Teile eines handelsüblichen Epoxidharzes auf Basis Bisphenol A (Epoxidäquivalentgewicht 485), 39 Teile Xylol und 265 Teile eines Polycaprolactonpolyols (unter dem Handelsnamen PCP 0200 der Union Carbide Corp. erhältlich) vorgelegt. Die Mischung wird auf Rückfluß erhitzt und 30 Minuten bei dieser Temperatur gehalten. Danach kühlt man auf 140°C ab und setzt 3,85 Teile Dimethylbenzylamin zu. Die Reaktionsmischung wird dann 2,5 Stunden bei 130°C gehalten.

b) Darstellung des Bindemittels II
In einem geeigneten Reaktor werden 1 024 Teile eines handelsüblichen Epoxidharzes auf Basis Bisphenol A (Epoxidäquivalentgewicht 188), 142 Teile Neopentylglykol und 40 Teile Xylol vorgelegt und auf 125°C erhitzt. Man fügt 4,1 Teile Dimethylbenzylamin zu und läßt die Temperatur auf 130°C ansteigen. Man hält diese Temperatur, bis ein Epoxidäquivalentgewicht von 425 erreicht ist und gibt 366 Teile eines Polycaprolactonpolyols (unter dem Handelsnamen PCP 0200 der Union Carbide Corp. erhältlich) und 3,1 Teile Dimethylbenzylamin zu. Man hält die Temperatur bei 130°C, bis das Epoxidäquivalentgewicht 1085 erreicht hat.

c) Darstellung des Bindemittels III

In einem geeigneten Reaktor werden 992 Teile Epikote 1001 (Epoxidäquivalentgewicht 495) und 1 814 Teile Epikote 1055 (Epoxidäquivalentgewicht 910, beides Handelsprodukte der Shell, Epoxidharze auf Basis Bisphenol A) mit 864 Teilen Methylisobutylketon vorgelegt und erhitzt. Bei 117°C wird Vakuum angelegt und Wasser ausgekreist. Danach kühlt man auf 70°C ab und tropft 210 Teile Diethanolamin zu. Hierbei steigt die Temperatur auf 80°C an. Man hält die Temperatur für 6 Stunden und gibt dann 630 Teile eines Umsetzungsprodukts aus 1 Mol Hexamethylendiamin und 2 Molen Cardum E 10 zu. Anschließend wird 7 Stunden lang auf 120°C erwärmt. Danach mischt man 141 Teile Hexylglykol und 446 Teile Xylol unter.

C) Darstellung einer grauen Pigmentpaste

Zu 953 Teilen eines handelsüblichen Epoxidharzes auf Basis Bisphenol A mit einem Epoxidäquivalentgewicht von 8 % werden 800 Teile Butylglykol gegeben. Die Mischung wird auf 80°C erhitzt. In die Harzlösung werden dann 221 Teile eines Umsetzungsproduktes aus 101 Teilen Diethanolamin und 120 Teilen 80 %-iger wäßriger Milchsäure gegeben. Man führt die Reaktion bei 80°C durch, bis die Säurezahl unter 1 gefallen ist.

1 800 Teile dieses Produkts werden mit 2 447 Teilen entionisiertem Wasser vorgelegt und mit 2 460 Teilen Titandioxid, 590 Teilen eines Extenders auf Basis Aluminiumsilikat, 135 Teilen Bleisilikat und 37 Teilen Ruß vermengt. Diese Mischung wird in einem Mahlaggregat auf eine Hegman-Feinheit von 5 bis 7 zerkleinert. Danach gibt man 1 255 Teile entionisiertes Wasser zu, um die gewünschte Pastenkonsistenz zu erreichen. Diese graue Paste ist sehr lagerstabil.

D) Beispiele

Allgemeine Beschreibung der Herstellung der Elektrotauchlack-Überzugsmittel

Unter Verwendung der in den folgenden Beispielen beschriebenen Dispersionen werden Elektrotauchlack-Überzüge hergestellt. Hierzu werden jeweils 2 000 Gewichtsteile der Bindemitteldispersionen mit 775 Gewichtsteilen der grauen Pigmentpaste vermischt. Der Badfestkörper wird mit entionisiertem Wasser auf 20 % (150°C, 30') eingestellt. Man läßt dann das Bad 3 Tage unter Rühren altern. Die Abscheidung der Lackfilme erfolgt während 2 Minuten auf zinkphosphatiertem Blech. Die Spannung wird dabei so gewählt, daß man für die einzelnen Bindemittel typischen Schichtdicken erreicht. Die Badtemperatur beträgt hierbei 27°C. Die abgeschiedenen Filme werden bei 180°C während 20 Minuten eingebrannt.

**Beispiel 1**

Dem Bindemittel I werden 802 Teile des Polyurethanvernetzers I zugesetzt. Nach der Zugabe und Einarbeitung von Hexylglykol fügt man noch 201 Teile des Vernetzers II und 12 Teile Bleioctoat zu und mischt 15 Minuten unter. 2 350 Teile des Ansatzes werden in einem anderen Reaktor mit 3 015 Teilen entionisiertem Wasser, 24,7 Teilen Eisessig und 48,3 Teilen einer Emulgatorlösung dispergiert.

**Beispiel 2**

Dem Bindemittel II werden 971 Teile des Vernetzers I zugesetzt. Vor dem Dispergieren werden 2 290 Teile der Harzlösung mit 210 Teilen des Vernetzers III gemischt. Danach wird diese Harzlösung in 3 439 Teilen entionisiertem Wasser, 39 Teilen Eisessig und 23 Teilen Emulgatorlösung dispergiert.

**Beispiel 3**

1 854 Teile des Bindemittels III werden mit 452 Teilen des Vernetzers II und 194 Teilen des Vernetzers III und mit 60 Teilen Bleioctoat versetzt und anschließend in 3 220 Teilen entionisiertem Wasser und 35 Teilen Eisessig dispergiert.

**Vergleichsbeispiel 1**

Das Bindemittel I wird mit 1 003 Teilen des Polyurethanvernetzers I versetzt. Die Reaktionsmischung wird dadurch auf 110°C gekühlt, und man gibt 64 Teile Methylethanolamin und 40 Teile einer 70 %-igen Lösung von Methylisobutyldiketimin des Diethylentriamin zu. Das Diketimin erhält man aus 1 Mol Diethylentriamin und 2 Molen Methylisobutylketon. Die Herstellung ist in der US-Patentschrift 35 23 925 beschrieben. Die Reaktionsmischung wird nun 1 Stunde bei 115°C gehalten. Danach verdünnt man mit 104 Teilen Hexylglykol und hält die Reaktionsmischung eine weitere Stunde auf 115°C. Danach werden 2 350 Teile des Ansatzes in einem anderen Reaktor mit 3 015 Teilen entionisiertem Wasser, 24,7 Teilen Eisessig und 840,3 Teilen einer Emulgatorlösung dispergiert.

**Vergleichsbeispiel 2**

1 189 Teile des Vernetzers I werden zu dem obenbeschriebenen Bindemittel II gemischt. Dadurch fällt die Temperatur ab. Man gibt 107 Teile des obenerwähnten Ketimins und 80 Teile Methylethanolamin zu. Dadurch steigt die Temperatur wieder an. Man hält sie für eine Stunde bei 115°C und fügt 76 Teile Phenoxypropanol und 38 Teile Ethylglykol zu und mischt 15 Minuten unter. 2 500 Teile dieser Harzlösung werden danach in 3 439 Teilen entionisiertem Wasser, 39 Teilen Eisessig und 23 Teilen Emulgatorlösung dispergiert.

**Vergleichsbeispiel 3**

1 854 Teile des Bindemittels III werden mit 646 Teilen des Vernetzers II und 60 Teilen Bleioctoat versetzt und anschließend in 3 220 Teilen entionisiertem Wasser und 35 Teilen Eisessig dispergiert.

Bewertung der eingebrannten Filme

|  | Bindemittel | Vernetzer | Verlauf* | DOI** |
|---|---|---|---|---|
| Beispiel 1 | I | I + II | 0,5 | 85 |
| Beispiel 2 | II | I + III | 0 | 93 |
| Beispiel 3 | III | II + III | 1 | 89 |
| Vergleichsbeisp. 1 | I | I | 2 | 67 |
| Vergleichsbeisp. 2 | II | I | 2 | 62 |
| Vergleichsbeisp. 3 | III | II | 3 | 58 |

\* 0 = bester Wert 5 = schlechtester Wert

** DOI = distinctness of reflected image

Die grundierten Bleche wurden zu dieser Messung 50 µm eines Acrylatdecklackes beschichtet.

Der DOI-Wert wird in einer Relativmessung ermittelt und ist ein Maß für das Glanzverhalten einer fast ideal spiegelnd reflektierenden Fläche. Bei der Messung wird der Meßwert im Reflexionsmaximum, das heißt der Einfallswinkel eines Lichtstrahls ist gleich dem Ausfallswinkel, in das Verhältnis gesetzt zu dem Meßwert, den man erhält, wenn die Winkel um 0,3° differieren.

**Patentansprüche**

1. Kathodisch abscheidbares wäßriges Elektrotauchlack-Überzugsmittel, das ein Kunstharzbindemittel enthält, welches Aminogruppen und/oder Hydroxylgruppen enthält und durch Protonisieren mit Säuren wasserlöslich gemacht werden kann, und das eine Mischung von unterschiedlich reaktiven Vernetzungsmitteln sowie Pigmente, Füllstoffe, Korrosionsinhibitoren, Lackhilfsmittel, ggf. Katalysatoren und in einer Menge bis zu 15 Gew.-%, bezogen auf das Gesamtgewicht des Überzugsmittels, organische Lösungsmittel enthält, dadurch gekennzeichnet, daß die Mischung der Vernetzungsmittel mindestens 2 unterschiedlich reaktive Vernetzungsmittel auf der Basis mit unterschiedlichen Alkylmonoalkoholen blockierter Polyisocyanate oder auf der Basis mit unterschiedlichen aliphatischen Aminen blockierter Polyisocyanate oder auf der Basis mit aliphatischen Aminen und Alkylmonoalkoholen blockierter Polyisocyanate oder auf der Basis aktivierter Ester oder auf der Basis aktivierter Ester und blockierter Polyisocyanate enthält, wobei unterschiedlich reaktiv bedeutet, daß die Vernetzungsreaktion beim Erhitzen bei Temperaturen, die um mindestens 10°C auseinanderliegen, beginnt und wobei der Zuerst reagierende Vernetzer in einem Anteil von 15 bis 60 Mol-%, bezogen auf die Vernetzungsmittelmischung, vorliegt.

2. Elektrotauchlack-Überzugsmittel nach Anspruch 1, dadurch gekennzeichnet, daß die aktivierten Ester β-Hydroxyalkylester, β, γ-Dihydroxyalkylester, β-Alkoxyalkylester und/oder Carbalkoxymethylester sind.

3. Elektrotauchlack-Überzugsmittel nach Anspruch 1, dadurch gekennzeichnet, daß die aktivierten Ester eine Aktivierung im Säureteil aufweisen.

4. Verfahren zum Beschichten eines elektrisch leitenden Substrats, bei dem das Substrat in ein wäßriges Bad auf der Basis eines mindestens teilweise mit Säuren neutralisierten, kationischen, Amino- und/oder Hydroxylgruppen enthaltenden Kunstharz-Bindemittels, das eine Mischung von unterschiedlich reaktiven Vernetzungsmitteln sowie Pigmente, Füllstoffe, Korrosionsinhibitoren, Lackhilfsmittel, ggf. Katalysatoren und in einer Menge bis zu 15 Gew.-%, bezogen auf das Gesamtgewicht des Überzugsmittels, organische Lösungsmittel enthält, eintaucht und als Kathode geschaltet wird, mittels Gleichstrom ein Film auf dem Substrat abgeschieden wird, das Substrat aus dem Bad entfernt wird und der Film durch Einbrennen gehärtet wird, dadurch gekennzeichnet, daß die Mischung der Vernetzungsmittel mindestens 2 unterschiedlich reaktive Vernetzungsmittel auf der Basis mit unterschiedlichen Alkylmonoalkoholen blockierter Polyisocyanate oder auf der Basis mit unterschiedlichen aliphatischen Aminen blockierter Polyisocyanate oder auf der Basis mit aliphatischen Aminen und Alkylmonoalkoholen blockierter Polyisocyanate oder auf der Basis aktivierter Ester oder auf der Basis aktivierter Ester und blockierter Polyisocyanate enthält, wobei unterschiedlich reaktiv bedeutet, daß die Vernetzungsreaktion beim Erhitzen bei Temperaturen, die um mindestens 10°C auseinanderliegen, beginnt und wobei der zuerst reagierende Vernetzer in einem Anteil von 15 bis 60 Mol-%, bezogen auf die Vernetzungsmittelmischung, vorliegt.

## Claims

1. Aqueous cathodic electrocoating material which contains a synthetic resin binder which contains amino groups and/or hydroxyl groups and can be rendered watersoluble by protonization with acids, and which contains a mixture of crosslinking agents which possess different reactivities, as well as pigments, filters, corrosion inhibitors, surface coating assistants, if appropriate catalysts, and organic solvents in an amount of up to 15 % by weight, based on the total weight of the coating agent, characterized in that the mixture of the crosslinking agents contains at least 2 crosslinking agents which possess different reactivities and are based on polyisocyanates blocked with different alkyl monoalcohols or based on polyisocyanates blocked with different aliphatic amines or based on polyisocyanates blocked with aliphatic amines and alkyl monoalcohols or based on activated esters or based on activated esters and blocked polyisocyanates and different reactivities means that the crosslinking reaction during heating begins at temperatures which are at least 10°C apart, and the cross-linking agent which reacts first is present in an amount of from 15 to 60 mol-%, based on the mixture of the cross-linking agents.

2. Electrocoating material according to claim 1, characterized in that the activated esters are β-hydroxyalkyl esters, β,γ-dihydroxyalkyl esters, β-alkoxyalkyl esters and/or carbalkoxymethylesters.

3. Electrocoating material according to Claim 1, characterized in that the activated esters are activated in the acid moiety.

4. Process for coating an electrically conductive substrate, in which the substrate is immersed in an aqueous bath based on a cationic synthetic resin binder which is at least partially neutralized with acids, contains amino and/or hydroxyl groups and contains a mixture of crosslinking agents which possess different reactivities as well as pigments, filters, corrosion inhibitors, surface coating assistants, if appropriate catalysts, and organic solvents in an amount of up to 15 % by weight, based on the total weight of the coating agent, and the substrate is made the cathode, a film is deposited on the substrate by means of direct current, the substrate is removed from the bath and the film is cured by baking, characterized in that the mixture of the crosslinking agents contains at least two crosslinking agents which possess different reactivities and are based on polyisocyanates blocked with different alkyl monoalcohols or based on polyisocyanates blocked with different aliphatic amines or based on polyisocyanates blocked with aliphatic amines and alkyl monoalcohols or based on activated esters or based on activated esters and blocked polyisocyanates and different reactivities means that the crosslinking reaction during heating begins at temperatures which are at least 10°C apart, and the crosslinking agent which reacts first is present in an amount of from 15 to 60 mol-%, based on the mixture of the crosslinking agents.

## Revendications

1. Agent de revêtement aqueux pour vernis d'électrodéposition cationiques, qui renferme un liant en résine synthétique, lequel renferme des groupes amino et/ou des groupes hydroxyle, et peut être rendu soluble dans l'eau par protonation avec des acides, et qui renferme un mélange d'agents de réticuletion ayant des réactivités différentes, ainsi que des pigments, des charges, des inhibiteurs de corrosion, des adjuvants pour vernis, le cas échéant, des catalyseurs, et, dans une quantité allant jusqu'à 15 % en poids, par rapport au poids total de l'agent de revêtement, des solvants organiques, caractérisé par le fait que le mélange des agents de réticulation renferme au moins 2 agents de réticulation à réactivité différente, à base de polyisocyanates bloqués par des monoalcools alkyliques différents, ou à base de polyisocyanates bloqués par des amines aliphatiques différentes, ou à base de polyisocyanates bloqués par des amines aliphatiques et des monoalcools alkyliques, ou à base d'esters activés, ou à base d'esters activés et de polyisocyanates bloqués, l'expression "ayant des réactivités différentes" signifiant que la réaction de réticulation commence lors du chauffage à des températures, qui diffèrent l'une de l'autre d'au moins 10°C, et le réticulant réagissant en premier étant présent en une fraction allant de 15 à 60 %, en moles, par rapport au mélange des agents de réticuletion.

2. Agent de revêtement pour vernis d'électrodéposition selon la revendication 1, caractérisé par le fait que les esters activés sont des esters β-hydroxyalkyliques, des esters β, γ-dihydroxyalkyliques, des esters β-alcoxyalkyliques et/ou des esters carbalcoxyméthyliques.

3. Agent de revêtement pour vernis d'électrodéposition selon le revendication 1, caractérisé par le fait que les esters activés présentent une activation dans la fraction acide.

4. Procédé de revêtement d'un substrat électriquement conducteur, suivant lequel on immerge le substrat dans un bain aqueux à base d'un liant en résine synthétique renfermant des groupes amino et/ou hydroxyle, cationiques, au moins en partie neutralisés par des acides, qui renferme un mélange d'agents de réticulation ayant des réactivités différentes, de même que des pigments, des charges, des inhibiteurs de corrosion, des adjuvants pour vernis, le cas échéant, des catalyseurs, et, en une quantité allant jusqu'à 15 % en poids, par rapport au poids total de l'agent de revêtement, des solvants organiques, et on monte ledit substrat en cathode, on dépose un film sur le substrat à l'aide de courant continu, on retire le substrat du bain, et on fait durcir le film par cuisson, caractérisé par le fait que le mélange des agents de réticulation renferme au moins 2 agents de réticulation ayant des réactivités différentes, à base de polyisocyanates bloqués par des monoalcools alkyliques différents, ou à base de polyisocyanates bloqués par des amines aliphatiques différentes, ou à base de polyisocyanates bloqués par des amines aliphatiques et des monoalcools alkyliques, ou à base d'esters activés, ou à base d'esters activés et de polyisocyanates bloqués, l'expression "ayant des réactivités différentes" signifiant que la réaction de réticulation commence lors du chauffage à des températures, qui sont différentes l'une de l'autre d'au moins 10°C, et le réticulant réagissant en premier étant présent en une fraction allant de 15 à 60, en moles, par rapport au mélange des agents de réticulation.